# EUROPEAN PATENT APPLICATION

(11) **EP 0 686 349 A2**
(43) Date of publication of application: **13.12.1995**
(21) Application number: 95201459.5
(22) Date of filing: 02.06.1995
(51) Int. Cl.: A21D 8/04

(54) **Method for the industrial preparation of long fermentation bread**

(30) Priority: 08.06.1994 IT MI941196
(71) Applicant: M.G. BRAIBANTI S.p.A., I-20122 Milan (IT)
(72) Inventor: Degli Angeli, Alessandro, I-43100 Parma (IT)
(74) Representative: Appoloni, Romano

(57) **Abstract**

A method for the industrial preparation of ciabatta-type bread is described, comprising the following stages:
a) kneading;
b) maturing;
c) degassing;
d) division into sized pieces;
e) leavening in a cabinet and stretching;
f) baking;
wherein during the kneading stage a) a culture broth containing bacteria and yeast is added to the dough mix,
the cabinet leavening stage e) requiring a time of 20-30 minutes.

The main advantage of the method of the present invention is the fact that the addition of the culture broth to the dough mix shortens the maturing and leavening time, with consequent economic advantage.

## Description

This invention relates to a method for the industrial preparation of long fermentation bread (of ciabatta, baguette or puffed roll type).

In the known art long fermentation bread is prepared by a method comprising a considerable number of stages, specifically a first stage consisting of kneading; a second stage consisting of maturing in a trough for 12-24 hours at a temperature of between 18°C and 22°C until the pH reaches 5.2-5.4; a third stage consisting of remixing or degassing with the addition of water and salt; a fourth stage consisting of maturing; a fifth stage consisting of division into pieces of the required size; a sixth stage consisting of leavening in a cabinet for a time of 1-2 hours, with manual stretching three quarters through the leavening; and finally a seventh stage consisting of baking.

During the second stage in which the dough is matured (fermented) for 12-24 hours in a conditioned environment, organic acids (such as lactic acid, acetic acid, etc.) are produced and act on the flour proteins to relax the gluten and form a particular rheological structure which on baking results in a wide honeycomb typical of bread of ciabatta type (suitable dough rheology).

Said organic acids are also able to react with the alcohols produced by the yeast to provide the esters responsible for the typical aroma and fragrance of bread fermentation.

On termination of the maturing stage the pH is approximately 5.2-5.4.

There is then a sixth stage comprising leavening in a cabinet for 1-2 hours; three quarters through the leavening the dough is stretched manually, reversed and then left to complete its leavening.

These stages require a considerable investment in terms of money, logistics and personnel for the troughs, the conditioned environment, the necessary labour, the length of the leavening cabinet etc.

The object of the present invention is therefore to overcome said drawbacks by considerably reducing the time required for the maturing and cabinet leavening stages.

This object is attained according to the present invention by a method for the industrial preparation of long fermentation bread comprising the following stages:
a) kneading;
b) maturing;
c) degassing;
d) division into sized pieces;
e) leavening in a cabinet and stretching;
f) baking;
characterised in that during the kneading stage a) a culture broth containing bacteria and yeast is added to the dough mix,
the cabinet leavening stage e) requiring a time of 20-30 minutes.

The main advantage of the method of the present invention is the fact that the addition of said broth during the kneading stage shortens the maturing time by eliminating the 12-24 hour maturing stage of the known art which from an industrial viewpoint is particularly costly.

The leavening time is also reduced with the consequent advantage of a considerable shortening of the leavening cabinet and hence a considerable cost reduction.

The structural and functional characteristics and the advantages of a method according to the present invention will be more apparent from the detailed description thereof given hereinafter by way of non-limiting example.

The dough which is mixed with the culture broth during the kneading stage a) is prepared using the following ingredients in the stated proportions (expressed as parts by weight):

| | |
|---|---|
| strong flour (W = 280-320; P/L = 0.4-0.6) | 100 |
| water | 60-72 |
| compressed yeast | 1-2 |
| salt | 2.5 |
| malt | 0.8 |
| improver | 1 |

The culture broth contains bacteria such as L-Plantarum, L-Brevis, Leuconostoc Mesentertipes and L-San Francisco, and yeast such as Saccaromyces Cerevisiae, Saccaromyces Exiguus and Sporobolomyces Odorus and was supplied by the company Bioanswer of Turin.

This broth hence already contains the fermentation products of the yeast and bacteria, and in particular lactic acid, acetic acid, dextran, ethyl alcohol, enzymes, glycerol, organic esters, trimethylacetic acid and carbon dioxide.

The kneading stage a) is carried out in a kneader of spiral or dipping arm type, or another bread kneader.

The maturing stage b) is then effected followed by the degassing stage c). The maturing stage b) is carried out in troughs for one hour at a temperature of between 18°C and 22°C.

During this stage, because of the presence of the fermentation broth all the chemical and physical phenomena which in the known art require 12-24 hours take place in one hour.

In this respect, this broth incorporated into the dough has the same effect on the gluten (same rheology) as lengthy maturing in that it induces the same relaxing and consequently a dough rheology suitable for the structure (honeycomb) typical of bread of ciabatta type.

It also results in the production of aromatic substances responsible for the fragrance resulting from long maturing. In this respect the broth already contains organic acids produced by the bacteria and alcohols produced by the yeast which can result in the formation of esters, esters in any event being already present as they are produced by the yeast, and are responsible for the fragrance of the final product.

This broth has a very low pH of about 3.8-4. On termination of stage b) the dough has a pH of between 5.2 and 5.4, ie equal to the pH obtained after lengthy maturing.

Stage d) involving division into pieces of the required size is then effected followed by stage e) involving leavening in a cabinet plus stretching.

In stage e) the cabinet leavening is effected at a temperature of between 32°C and 34°C at a percentage humidity of between 75% and 80%.

The product obtained in this manner is then subjected to the final baking stage f) in a cyclothermic bread oven, on a grid.

As already stated, the main advantage of the method of the present invention is the fact that the addition of the culture broth to the dough mix shortens the maturing and leavening time, with consequent economic advantage.

In this respect the 12-24 hour maturing stage of the known art is eliminated, and which from an industrial viewpoint has proved particularly costly.

A further advantage of the method of the present invention is the shortening of the leavening cabinet, made possible by the shorter leavening time, with considerable cost reduction.

## Claims

1. A method for the industrial preparation of long fermentation bread comprising the following stages:
a) kneading;
b) maturing;
c) degassing;
d) division into sized pieces;
e) leavening in a cabinet and stretching;
f) baking;
characterised in that during the kneading stage a) a culture broth containing bacteria and yeast is added to the dough mix,
the cabinet leavening stage e) requiring a time of 20-30 minutes.

2. A method as claimed in claim 1, characterised in that the maturing stage b) is carried out in troughs for one hour, at a temperature of between 18°C and 22°C.

3. A method as claimed in claim 1, characterised in that the cabinet leavening stage e) is carried out at a temperature of between 32°C and 34°C at a percentage humidity of between 75% and 80%.

4. A method as claimed in claim 1, characterised in that on termination of stage b) the dough has a pH of between 5.2 and 5.4.
